# EUROPÄISCHE PATENTSCHRIFT

(11) **EP 3 066 563 B1**
(45) Veröffentlichungstag und Bekanntmachung des Hinweises auf die Patenterteilung: **02.03.2022**
(21) Anmeldenummer: 14796417.5
(22) Anmeldetag: 03.11.2014
(51) Int. Cl.: G06F 9/445

(54) **VERFAHREN ZUM SICHEREN UND DYNAMISCHEN NACHLADEN VON ZUSÄTZLICHER SOFTWARE VON EINEM WEBRTC-SERVER IN EINEN WEBRTC-CLIENT**
METHOD FOR THE SECURE AND DYNAMIC RELOADING OF ADDITIONAL SOFTWARE FROM A WEBRTC SERVER TO A WEBRTC CLIENT
PROCÉDÉ PERMETTANT UN RECHARGEMENT SÛR ET DYNAMIQUE D'UN LOGICIEL SUPPLÉMENTAIRE À PARTIR D'UN SERVEUR WEBRTC DANS UN CLIENT WEBRTC

(30) Priorität: 06.11.2013 DE 102013018624
(43) Veröffentlichungstag der Anmeldung: 14.09.2016
(73) Patentinhaber: Unify Patente GmbH & Co. KG, 81739 München (DE)
(72) Erfinder: KLAGHOFER, Karl, 81373 München (DE); RANSMAYR, Viktor, 80686 München (DE)
(74) Vertreter: Fritzsche, Thomas
(86) Internationale Anmeldenummer: PCT/EP2014/002940
(87) Internationale Veröffentlichungsnummer: WO 2015/067358

(56) Entgegenhaltungen:
- US-A1- 2009 154 556
- US-A1- 2010 306 074

## Beschreibung

Die vorliegende Erfindung betrifft ein computerimplementiertes Verfahren zum sicheren und dynamischen Nachladen von zusätzlicher Software von einem WebRTC-Server in einen WebRTC-Client sowie eine entsprechende Computeranordnung.

WebRTC-Browser Hersteller wie Google oder Mozilla liefern ihre Browser in der Regel mit bestimmten Codecs aus. Zu diesen Codecs gehören beispielsweise Audio-Codecs, beispielsweise G.711 und OPUS, sowie Video-Codecs, wofür VP8 als Beispiel zu nennen ist. Derartige Codecs sind somit integraler Bestandteil dieser webRTC-fähigen Browser.

Für Hersteller von Applikationen für WebRTC ist es jedoch nicht ohne Weiteres möglich, in ihren Projekten zusätzliche Codecs, die in der ursprünglichen Browser-Version noch nicht enthalten waren, auf eine sichere Art und Weise zu integrieren, um damit einen zusätzlichen Nutzen für ihre Kunden zu generieren. Ein Teil des Problems liegt darin, dass derartige zusätzliche Codecs häufig durch ein gewerbliches Schutzrecht geschützt sind und somit nur gegen Zahlung einer entsprechenden Lizenzgebühr erworben und installiert werden können.

Zur Nachinstallation derartiger Codecs wird in der Regel so vorgegangen, dass diese über sogenannte Browser-Plug-Ins geladen und anschließend installiert werden können. Bei WebRTC-Browsern bestehen jedoch folgende Nachteile:
- Die Charta von WebRTC bei IETF/W3C sieht vor, dass WebRTC ohne Plug-Ins auskommen soll. Dies bedeutet, dass die betreffenden Codecs inhärent im Browser integriert sein sollen, d. h. bereits durch die Browserhersteller fest eingebaut sein sollen.
- Das spezifische Problem von Browserherstellern bei der Erfüllung der obigen Anforderung besteht darin, dass Codecs, für die ein gewerbliches Schutzrecht (oft auch kurz als Intellectual Property Right bzw. IPR bezeichnet) besteht und die deshalb mit Lizenzkosten behaftet sind, nicht mit den kostenlosen Browsern der Hersteller ausgeliefert werden können.
- Browser-Plug-Ins stellen ein Sicherheitsrisiko dar, da die Quelle der hierdurch nachinstallierten Codecs nicht sicher kontrolliert werden kann, und sie sind damit auch ein zusätzliches Hindernis hinsichtlich der Akzeptanz von WebRTC-Applikationslösungen bei vielen Kunden.

Das vorstehend am Beispiel von Audio- und Video-Codecs beschriebene Problem der sicheren Nachinstallation von Codecs besteht ganz allgemein auch bei anderer Software, die in einem WebRTC-Client wie z.B. einem Browser - insbesondere WebRTC-Browser - nachinstalliert werden soll.

Die US 2009/0154556 A1 beschreibt ein adaptives Multimedia-System mit einem Server und angeschlossenen Geräten wie etwa Abspielgeräten für von einer Videokamera aufgenommenen Videos. Der Server empfängt von den Abspielgeräten Profilinformationen und erhält so die Nachricht, ob dort ein entsprechender Codec zur Verfügung steht, um die Videoinhalte abzuspielen. Über eine Datenleitung wird sodann in Abhängigkeit von dem Profil gegebenenfalls neben den Multimedia-Inhalten auch der Codec übermittelt. Das Abspielen der Multimediainhalte erfolgt anschließend aus einem Speicher mittels des erhaltenen Codecs.

Der Erfindung liegt somit die Aufgabe zugrunde, diese Nachteile zu beseitigen und ein Verfahren zum sicheren und dynamischen Nachladen von zusätzlicher Software von einem WebRTC-Server in einen WebRTC-Client sowie eine entsprechende Computeranordnung anzugeben.

Diese Aufgabe wird mittels eines Verfahrens sowie mittels einer Computeranordnung, eines Computerprogramms bzw. Computerprogrammprodukts und eines maschinenlesbaren Datenträgers, auf dem ein entsprechendes Computerprogramm gespeichert ist, gemäß der unabhängigen Ansprüche gelöst.

Vorteilhafte Weiterbildungen der Erfindung sind Gegenstand der abhängigen Ansprüche.

Erfindungsgemäß läuft ein computerimplementiertes Verfahren zum sicheren und dynamischen Nachladen von zusätzlicher Software von einem WebRTC-Server in einen WebRTC-Client in folgenden Schritten ab: Im Zuge des Aufbaus der WebRTC-Verbindung zwischen dem WebRTC-Client und dem WebRTC-Server wird die benötigte Software übertragen, indem hierfür ein WebRTC-Datenkanal verwendet wird. Auf diese Weise ist es möglich, die benötigte Software in sicherer und dynamischer Art und Weise nachzuladen und nachzuinstallieren, ohne auf ein Browser-Plug-In zurückgreifen zu müssen. Der WebRTC-Datenkanal wird übrigens auch als WebRTC-Datachannel bezeichnet. Dieser WebRTC-Datenkanal an sich ist durch IETF/W3C standardisiert und setzt auf einer sicheren Übertragung auf Basis von IP/UDP/DTLS/SCTP auf.

Es ist von Vorteil, dass der WebRTC-Datenkanal nach der Übertragung der Software aufrechterhalten und nicht sofort wieder abgebaut wird, so dass beispielsweise ein schnelles Nachladen von weiterer benötigter Software ohne Zeitverzug ermöglicht wird.

Es ist außerdem vorteilhaft, dass die Software automatisch zum Zeitpunkt des Aufbaus der WebRTC-Verbindung zwischen dem WebRTC-Client und dem WebRTC-Server übertragen wird, so dass ein Benutzer sich um diesen Aspekt nicht eigens kümmern muss. Für das Beispiel eines Telefonanrufs bzw. einer Konferenz kann dies bedeuten, dass der Download eines Audio-Codecs automatisch zum Zeitpunkt des getätigten Telefonanrufs bzw. der getätigten Konferenz erfolgt.

Gemäß einer vorteilhaften Ausführungsform des erfindungsgemäßen Verfahrens ist die Software für eine Real-Time-Anwendung bestimmt. Insbesondere ist diese Software ein Codec wie beispielsweise ein Audio- oder Video-Codec.

Weitere Vorteile kann es bringen, wenn die Software im WebRTC-Client nur temporär geladen und nur während eines vorbestimmten Zeitraums benutzbar bleibt. Dies bedeutet im Fall des vorgenannten Beispiels, dass ein nachgeladener Codec nur für die Nutzung während eines Telefonanrufs bzw. während einer Konferenz zur Verfügung steht und nur so lange genutzt werden kann, bis der WebRTC-Client (insbesondere ein WebRTC-Browser) neu gestartet wird. Diese Vorgehensweise unterstützt ebenfalls das Vergütungsmodell des "pay as you use". Alternativ kann der nachgeladene Codec selbstverständlich auch permanent installiert und benutzbar bleiben, wodurch er auch nach einem Neustart des WebRTC-Clients bzw. des WebRTC-Browsers für die Benutzer zur Verfügung steht.

Das erfindungsgemäße Verfahren ist mit Vorteil als Computerprogramm bzw. Computerprogrammprodukt implementiert und kann auf einem maschinenlesbaren Datenträger gespeichert sein. Somit sind diese beiden Ausgestaltungen ebenfalls als zur vorliegenden Erfindung gehörig anzusehen.

Eine erfindungsgemäße Computeranordnung enthält einen ersten Computer, auf dem ein WebRTC-Client läuft, der zur Durchführung des vorstehend beschriebenen Verfahrens zum sicheren und dynamischen Nachladen von zusätzlicher Software von einem WebRTC-Server in einen WebRTC-Client geeignet ist. Ferner umfasst die erfindungsgemäße Computeranordnung einen zweiten Computer, der als WebRTC-Server dient und mittels dem die zu übertragende Software so bereitgehalten ist oder zugänglich gemacht wird, dass sie auf Anfrage durch einen WebRTC-Client abgerufen bzw. an diesen übertragen werden kann. Zur Verbindung dieser beiden Computer ist ein entsprechendes Netzwerk vorgesehen, das notwendigerweise so beschaffen sein muss, dass es einen WebRTC-Datenkanal (zusammen mit der WebRTC-Verbindung zwischen dem RTC-Client und dem WebRTC-Server) bereitstellen kann. Es liegt auf der Hand, dass mit einer erfindungsgemäßen Computeranordnung die gleichen Vorteile erzielt werden können, wie sie im Zusammenhang mit dem erfindungs- gemäßen Verfahren beschrieben wurden.

Weitere Vorteile, Merkmale und Besonderheiten der vorliegenden Erfindung ergeben sich aus der nachfolgenden Beschreibung vorteilhafter Ausführungsformen unter Bezugnahme auf die Zeichnung. Es zeigen:
- Fig. 1: eine schematische Übersicht über eine Ausführungsform eine erfindungsgemäße Computeranordnung, und
- Fig. 2: eine schematische Darstellung, wie das erfindungsgemäße Verfahren auf der Grundlage des standardisierten WebRTC-Protocol-Stacks ausgeführt wird.

Die Computeranordnung 10 wiederum umfasst einen ersten Computer 12, einen als WebRTC-Server dienenden zweiten Computer 14 sowie ein Netzwerk 16, das den ersten Computer 12 und den zweiten Computer 14 verbindet und überdies so gestaltet ist, dass es WebRTC-Verbindungen - zu denen auch WebRTC-Datenkanäle gehören - bereitstellen kann. Sobald dies ausgehandelt ist, kann die Software SW von einem Server 14 an den Client im ersten Computer 12 übertragen werden, was durch einen entsprechenden Pfeil symbolisch dargestellt ist.

Beim ersten Computer 12 ist schematisch eine CD-ROM 90 als Beispiel für einen Datenträger dargestellt, auf dem ein Computerprogramm bzw. Computerprogrammprodukt 92 gespeichert werden kann, welches wiederum schematisch als Blatt mit Programmcode dargestellt ist. Nach der Installation des Computerprogramms 90 in dem ersten Computer 12 kann ein auf diesem Computer 12 laufender WebRTC-Client in der erfindungsgemäßen Weise weiterentwickelt werden, um das erfindungsgemäße Verfahren auszuführen. Zur Erläuterung des erfindungsgemäßen Verfahrens wird nachfolgend davon ausgegangen, dass der WebRTC-Client als WebRTC-Browser (nachfolgend kurz mit "Browser" bezeichnet) vorliegt, der für einen Telefonanruf (kurz "Ruf") einen Audio-Codec von dem WebRTC-Server (nachfolgend kurz "Server") 14 laden möchte, da der standardmäßig im Browser integrierte Audio-Codec (beispielsweise G.711 oder OPUS) als nicht ausreichend angesehen wird. Ein derartiger Audio-Codec mit erweitertem Funktionsumfang basiert beispielsweise auf einem H.264 oder H.265.

Für die Anwendung der vorliegenden Erfindung sind natürlich auch Downloads von Sprach-Codecs wie G.729 zu erwähnen.

Gemäß dem folgenden Beispiel wird dem Benutzer auf seiner Benutzeroberfläche (z. B. über den Menüpunkt "Einstellungen") in seinem installierten bzw. benutzten Browser die Option angeboten, zusätzliche Codecs zu laden. Alternativ kann dies auch automatisch erfolgen, wofür als Beispiele die Installation des WebRTC-Clients bzw. -Browsers, der Zeitpunkt des ersten Telefonanrufs, etc. zu nennen sind.

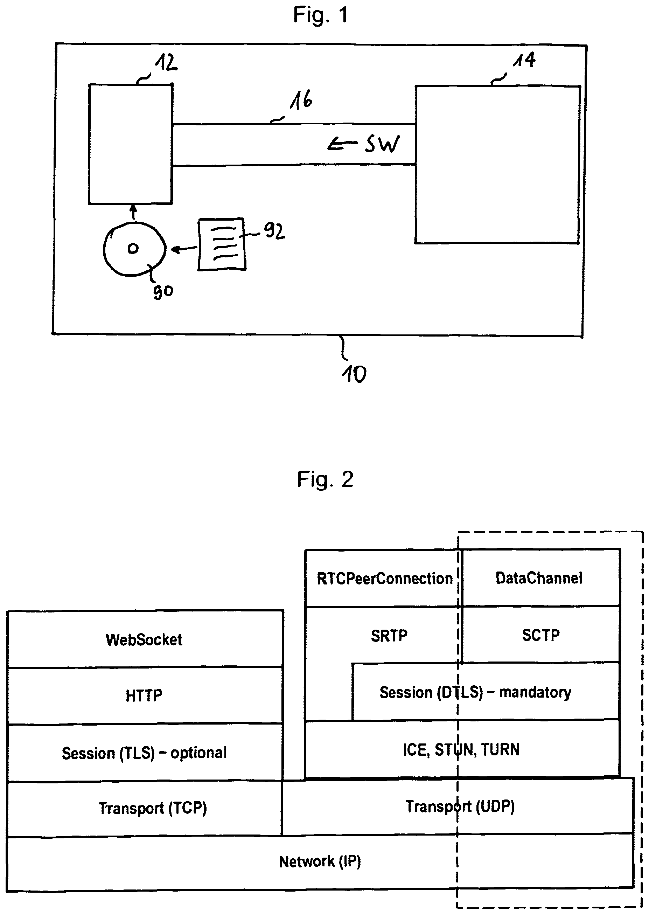

Erfindungsgemäß wird zunächst eine Signalisierung für den Verbindungsaufbau und für den Aufbau der entsprechenden Fähigkeiten des Browsers durchgeführt. Dies ist in der linken Säule von Fig. 2 dargestellt. Da die hier verwendeten Bezeichnungen und Abkürzungen an sich bekannt sind, wird auf eine detaillierte Beschreibung verzichtet. Diese linke Säule sowie die rechts daneben dargestellte rechte Säule sind Teil eines so genannten WebRTC-Protokoll-Stacks. Nach der Signalisierung wird eine WebRTC-Nutzdatenverbindung von einem Browser zu einer vordefinierten Serveradresse aufgebaut, wobei hier das WebRTC-Session-Signalling verwendet wird. Der Aufbau des WebRTC-Datenkanals und die Aushandlung der Eigenschaften dieses Datenkanals zwischen dem Browser und der Server-Applikation wird dabei beispielsweise via SDP (Session Description Protokoll) Offer/Answer-Methode durchgeführt. Beim Standard-WebRTC wird ein SCTP (Stream Control Transmission Protocol)-Kanal verwendet, der über die DTLS (Datagramm Transport Layer Security) gesichert ist, das ein Verschlüsselungsprotokoll darstellt. Über diesen sicheren, dynamisch zwischen dem Browser und dem Server ausgehandelten Datenkanal wird das Codec-File sicher an den Browser übertragen. Auf der Seite des Browsers erfolgt die Installation des Codecs über das Browser-API (API = Application Programming Interface). Dabei kann das Browser-API spezifisch für den Browser-Hersteller oder aber auch standardisiert sein. Diese Etablierung des WebRTC-Datenkanals und die Verwendung für die Übertragung des Codecs stellt im Grundsatz das erfindungsgemäße Verfahren dar und ist in der rechten Säule von Fig. 2 durch einen in gestrichelten Linien dargestellten Kasten bezeichnet. Es ist aus dem gestrichelten Kasten ersichtlich, dass der Datenkanal SCTP nutzt, welches wiederum durch DTLS gesichert wird. Diese Protokolle gehören zum standardisierten WebRTC, weshalb sie nicht ausführlich beschrieben und erläutert zu werden brauchen. Die eigentliche Kommunikation unter Verwendung der nachgeladenen Software bzw. des nachgeladenen Codecs erfolgt dann über den linken Teil der rechten Säule in Fig. 2, nämlich über die RTC-Peer-Connection und SRTP (Secure Real-Time Transport Protocol), also den "eigentlichen" Nutzkanal für die Übertragung der Daten, insbesondere in Mediendaten wie Audio- und/oder Videodaten, die über eine eigene WebRTC-Verbindung übertragen werden.

Nach erfolgreichem Download und lokaler Installation dieses zusätzlichen Codecs kann die Datenverbindung zwischen dem Endpunkt bzw. dem Browser und dem Server abgebaut werden. Alternativ kann der WebRTC-Datenkanal auch aufrechterhalten bleiben, um beispielsweise weitere Codecs oder andere Software schneller nachladen zu können. Ab diesem Zeitpunkt kann der Browser für WebRTC-Audioanwendungen und/oder WebRTC-Videoanwendungen wie Telefonanrufe oder Konferenzen sowohl die im Browser bereits integrierten, nicht mit Schutzrechten behafteten Codecs (z. B. G.711, OPUS, VP8) als auch die wie eben beschriebenen zusätzlich nachgeladenen Codecs (die der Browserhersteller bei der Erstellung des Browsers nicht in den Browser integrieren konnte, weil sie mit gewerblichen Schutzrechten und entsprechenden Lizenzkosten behaftet sind) nutzen.

Je nach Anwendung kann vorgesehen sein, dass der Codec-Download automatisch zum Zeitpunkt eines getätigten Rufes bzw. einer eingeleiteten Konferenz erfolgt. Es kann jedoch auch vorgesehen sein, den Codec-Download auf ausdrückliche Anforderung durch den Benutzer einzuleiten und durchzuführen.

Falls der nachgeladene Codec permanent installiert wird, steht er auch nach einem Neustart des Browsers weiterhin zur Verfügung. Für diese Verwendungsweise kann es beispielsweise zu relativ hohen Lizenzzahlungen für den betreffenden Codec kommen. Somit könne es einen Vorteil bringen, wenn der nachgeladene Codec nur temporär geladen (d. h. im RAM gehalten) wird und für die Nutzung nur während eines Rufes bzw. während einer Konferenz zur Verfügung steht oder nur so lange benutzbar bleibt, bis der Browser neu gestartet wird. Hiermit ist beispielsweise ein anderes Gebührenmodell möglich, bei dem nur die konkrete Nutzung zu bezahlen ist. Bei seltenem Einsatz von Codecs kann dies einen großen Vorteil für Kunden darstellen.

Zusammengefasst ist festzuhalten, dass erfindungsgemäß eine Erweiterung eines WebRTC-Clients wie beispielsweise eines Browsers mittels nachgeladener Software (z. B. ein Codec) möglich ist, mit der eine Konfigurierung dieses WebRTC-Clients möglich wird. Mittels des erfindungsgemäßen Verfahrens wird diese nachgeladene Software nicht nur aus einer sicheren Quelle - d. h. dem WebRTC-Server - geholt, sondern auch über einen sicheren Weg in Form eines WebRTC-Datenkanals übertragen. Somit ist die Erweiterung der Funktionalität des WebRTC-Clients auf sehr sichere Weise möglich. Da diese Erweiterung jederzeit zur Verfügung steht und auch beliebig änderbar ist, ist die Erweiterung auch sehr dynamisch.

Die vorliegende Erfindung kann auch bei weiteren Anwendungen wie Instant Messaging oder E-Mail-Verkehr eingesetzt werden.

Es ist festzuhalten, dass die unter Bezug auf die dargestellten Ausführungsformen beschriebenen Merkmale der Erfindung, wie beispielsweise die Art und Ausgestaltung einzelner Komponenten der Computeranordnung oder die Reihenfolge einzelner Schritte des Verfahrens, auch bei anderen Ausführungsformen vorhanden sein können, außer wenn es anders angegeben ist oder sich aus technischen Gründen von selbst verbietet.

### Bezugszeichenliste

- 10 =: Computeranordnung
- 12 =: erster Computer
- 14 =: zweiter Computer/WebRTC-Server
- 16 =: Netzwerk
- 90 =: Datenträger
- 92 =: Computerprogramm
- SW =: Software

## Patentansprüche

1. Computerimplementiertes Verfahren zum sicheren und dynamischen Nachladen von zusätzlicher Software (SW) von einem WebRTC-Server in einen WebRTC-Client, wobei die Software (SW) ein Audio- oder Video-Codec ist, und wobei der WebRTC-Client als WebRTC-Browser vorliegt, ,
**dadurch gekennzeichnet, dass** das Verfahren die folgenden Schritte umfasst:
- Durchführen einer Signalisierung an einen vorbestimmen WebRTC-Server für den Aufbau einer Verbindung und für den Aufbau der entsprechenden Fähigkeiten des WebRTC-Browsers;
- Aufbauen eines WebRTC-Datenkanals als WebRTC-Nutzdatenverbindung von einem WebRTC-Browser zu einer vorbestimmen Serveradresse des WebRTC-Servers und Aushandeln von Eigenschaften des WebRTC-Datenkanals zwischen dem WebRTC-Browser und einer Applikation des WebRTC-Servers;
- Übertragen eines Files mit nachzuladendem Audio- oder Video-Codec über den WebRTC-Datenkanal von dem WebRTC-Server an den WebRTC-Browser;
- Installieren des übertragenen Audio- oder Video-Codecs über eine Browser-Application Programming Interface des Web-RTC-Browsers;
- Verwenden desnachgeladenen Audio- oder Video-Codecs zum Herstellen eines von dem Datenkanal verschiedenen Nutzkanals über eineRTC-Peer-Connection und mittels des Secure Real-Time Transport Protocols zum Übertragen von Audio- und/oder Videodaten.

2. Verfahren nach einem Anspruch 1,
**dadurch gekennzeichnet, dass** die übertragenen Audio- oder Video-Codecs im WebRTC-Client nur temporär geladen und nur während eines vorbestimmten Zeitraums benutzbar bleiben.

3. Verfahren nach Anspruch 1 oder 2,
**dadurch gekennzeichnet, dass** nach dem Installieren des übertragenen Audio- oder Video-Codecs der Datenkanal wieder abgebaut wird.

4. Computerprogrammprodukt (92) zur Durchführung des Verfahrens gemäß einem der vorhergehenden Ansprüche.

5. Maschinenlesbarer Datenträger (90) mit darauf gespeichertem Computerprogrammprodukt (92) gemäß Anspruch 4.

6. Computeranordnung (10), umfassend
- einen ersten Computer (12), auf dem ein WebRTC-Browsers als WebRTC-Client läuft, der zur Durchführung des Verfahrens gemäß einem der Ansprüche 1 bis 3 geeignet ist, wobei der WebRTC-Browser als Software (SW) für eine Real-Time-Anwendung einen vorbestimmten Audio- oder Video-Codec umfasst,
- einen zweiten Computer (14), der als WebRTC-Server dient und in dem ein Audio- oder Video-Codec abrufbar gespeichert ist, und
- ein Netzwerk (16), das den ersten Computer (12) und den zweiten Computer (14) verbindet und zur Bereitstellung eines WebRTC-Datenkanals als einer Nutzdatenverbindung von dem WebRTC-Server zu dem vorbestimmen WebRTC-Client geeignet ist und zusätzlich zum Herstellen eines Nutzkanals mittels einer RTC-Peer-Connection und des Secure Real-Time Transport Protocol und so Übertragen von Audio- und/oder Videodaten über eine eigene WebRTC-Verbindung geeignet ist.

## Claims

1. A computer-implemented method for the secure and dynamic reloading of additional software (SW) from a WebRTC server to a WebRTC client, wherein the software (SW) is an audio or video codec, and wherein the WebRTC client is provided as a WebRTC browser,
**characterized in that** the method comprises the following steps:
- carrying out signaling to a predetermined WebRTC server to establish a connection and to develop the corresponding capabilities of the WebRTC browser;
- establishing a WebRTC data channel as a WebRTC useful data link from a WebRTC browser to a predetermined server address of the WebRTC server and negotiating properties of the WebRTC data channel between the WebRTC browser and an application of the WebRTC server;
- transferring a file having audio or video codec to be reloaded via the WebRTC data channel from the WebRTC server to the WebRTC browser;
- installing the transferred audio or video codec via a browser application programming interface of the WebRTC browser;
- using the reloaded audio or video codec to establish a useful channel different from the data channel via an RTC peer connection and by means of the secure real-time transport protocol for transferring audio and/or video data.

2. The method according to Claim 1,
**characterized in that** the transferred audio or video codecs are only temporarily loaded in the WebRTC client and only remain usable during a predetermined timeframe.

3. The method according to Claim 1 or 2,
**characterized in that**, after the installation of the transferred audio or video codec, the data channel is removed again.

4. A computer program product (92) for carrying out the method according to any one of the preceding claims.

5. A machine-readable data carrier (90) having computer program product (92) stored thereon according to Claim 4.

6. A computer arrangement (10), comprising
- a first computer (12), on which a WebRTC browser runs as a WebRTC client, which is suitable for carrying out the method according to any one of Claims 1 to 3, wherein the WebRTC software comprises a predetermined audio or video codec as software (SW) for a real-time application,
- a second computer (14), which is used as a WebRTC server and in which an audio or video codec is stored in a retrievable manner, and
- a network (16), which connects the first computer (12) and the second computer (14) and is suitable for providing a WebRTC data channel as a useful data link from the WebRTC server to the predetermined WebRTC client and is additionally suitable for establishing a useful channel by means of an RTC peer connection and the secure real-time transport protocol and thus transferring audio and/or video data via a separate WebRTC connection.

## Revendications

1. Procédé mis en œuvre par ordinateur pour un rechargement sécurisé et dynamique d'un logiciel (SW) supplémentaire depuis un serveur WebRTC vers un client WebRTC, dans lequel le logiciel (SW) est un codec audio ou vidéo, et dans lequel le client WebRTC est disponible en tant que navigateur WebRTC,
**caractérisé en ce que** le procédé comprend les étapes suivantes :
- réalisation d'une signalisation au niveau d'un serveur WebRTC prédéterminé pour la mise en place d'une liaison et pour la mise en place des capacités correspondantes du navigateur WebRTC ;
- mise en place d'un canal de données WebRTC en tant que liaison de données utiles WebRTC depuis un navigateur WebRTC vers une adresse de serveur prédéterminée du serveur WebRTC et négociation de propriétés du canal de données WebRTC entre le navigateur WebRTC et une application du serveur WebRTC ;
- transfert d'un fichier avec un codec audio ou vidéo à recharger par l'intermédiaire du canal de données WebRTC depuis le serveur WebRTC vers le navigateur WebRTC ;
- installation du codec audio ou vidéo transféré par l'intermédiaire d'une interface de programmation d'application de navigateur du navigateur WebRTC ;
- utilisation du codec audio ou vidéo rechargé pour la production d'un canal utile différent du canal de données par l'intermédiaire d'une connexion RTC-pair et au moyen du protocole de transport en temps réel sécurisé pour le transfert de données audio et/ou vidéo.

2. Procédé selon la revendication 1,
**caractérisé en ce que** les codecs audio ou vidéo transférés sont chargés uniquement temporairement dans le client WebRTC et restent utilisables uniquement pendant une période prédéterminée.

3. Procédé selon la revendication 1 ou 2,
**caractérisé en ce que**, après l'installation du codec audio ou vidéo transféré, le canal de données est de nouveau supprimé.

4. Produit de programme informatique (92) pour la réalisation du procédé selon l'une quelconque des revendications précédentes.

5. Support de données lisible par ordinateur (90) avec un produit de programme informatique (92), enregistré sur celui-ci, selon la revendication 4.

6. Système informatique (10), comprenant
- un premier ordinateur (12) sur lequel un navigateur WebRTC fonctionne en tant que client WebRTC, qui est approprié pour la réalisation du procédé selon l'une quelconque des revendications 1 à 3, dans lequel le navigateur WebRTC comprend un codec audio ou vidéo prédéterminé en tant que logiciel (SW) pour une utilisation en temps réel,
- un second ordinateur (14) qui sert de serveur WebRTC et est enregistré comme pouvant être consulté dans le codec audio ou vidéo, et
- un réseau (16) qui relie le premier ordinateur (12) et le second ordinateur (14) et est approprié pour la mise à disposition d'un canal de données WebRTC en tant que liaison de données utiles depuis le serveur WebRTC vers le client WebRTC prédéterminé et est en outre approprié pour la production d'un canal utile au moyen d'une connexion RTC-pair et du protocole de transport en temps réel sécurisé et ainsi le transfert de données audio et/ou vidéo par l'intermédiaire d'une liaison WebRTC dédiée.
